# EUROPÄISCHE PATENTSCHRIFT

(11) **EP 0 742 743 B1**
(45) Veröffentlichungstag und Bekanntmachung des Hinweises auf die Patenterteilung: **22.10.1997**
(21) Anmeldenummer: 95906260.5
(22) Anmeldetag: 24.01.1995
(51) Int. Cl.: B23C 5/22

(54) **WENDESCHNEIDPLATTE UND ZUGEHÖRIGES WERKZEUG**
THROWAWAY CARBIDE INDEXABLE INSERT AND ASSOCIATED TOOL
PLAQUETTE AMOVIBLE ET OUTIL ASSOCIE

(30) Priorität: 31.01.1994 DE 4402623; 01.06.1994 DE 4419094
(43) Veröffentlichungstag der Anmeldung: 20.11.1996
(73) Patentinhaber: Widia GmbH, 45145 Essen (DE)
(72) Erfinder: ROTHBALLER, Gerhard, D-91611 Lehrberg (DE); STALLWITZ, Erwin, D-91586 Lichtenau (DE); STORCH, Helmut, D-91541 Rothenburg (DE)
(74) Vertreter: Schieferdecker, Lutz, Dipl.-Ing.
(86) Internationale Anmeldenummer: DE9500083
(87) Internationale Veröffentlichungsnummer: WO9520452

(56) Entgegenhaltungen:
- EP-A- 0 372 717
- EP-A- 0 502 541
- EP-A- 0 517 019
- EP-A- 0 548 752
- FR-A- 2 271 896
- US-A- 3 229 349
- US-A- 5 366 325

## Beschreibung

Die Erfindung betrifft eine Wendeschneidplatte mit den Merkmalen des Oberbegriffes des Anspruches 1 sowie ein zur Verwendung dieser Wendeschneidplatte bestimmtes Werkzeug insbesondere in Gestalt eines Fräswerkzeuges.

Wendeschneidplatten mit einem Plattenkörper, der als Basisfläche eine ebene Auflagefläche sowie Hauptschneiden und Nebenschneiden an seiner, der Auflagefläche gegenüberliegenden Seite aufweist, wobei ferner die Freiflächen der Nebenschneiden von dieser zurücktretend schräg zur Auflagefläche geneigt sind, sind aus der EP 0 502 541 A1 bekannt. Sie erfüllen ihren Zweck grundsätzlich in zufriedenstellender Weise und besitzen in der Regel eine ausreichende Zerspanleistung. Dennoch besteht das Problem, die Standzeit, die Oberflächenqualität der verarbeiteten Flächen und auch die Spanleistung weiter zu verbessern.

Darüber hinaus kennt man aus der EP 0 548 752 A1 eine Wendeschneidplatte mit einem pyramidenstumpfförmigen Plattenkörper, der über seinen Umfang verteilt vier Hauptschneiden und im Bereich der Ecken vier Nebenschneiden aufweist. Die Hauptschneiden stehen schräg zur Auflagefläche und die Nebenschneiden stehen in einer Ebene parallel zur Auflagefläche. Die Herstellung dieser Wendeschneidplatte ist aufgrund der Schneidengeometrie kompliziert und im Hinblick auf die notwendigen Freiflächen und den pyramidenstumpfförmigen Plattenkörper außerordentlich aufwendig.

Der Erfindung liegt daher die Aufgabe zugrunde, eine Wendeschneidplatte zu schaffen, die höchsten Anforderungen hinsichtlich Standzeit und Oberflächengüte sowie Zerspanleistung gerecht wird, wobei zugleich wichtig ist, daß sich die Wendeschneidplatte auch auf einfache und unproblematische Weise herstellen läßt.

Zur Lösung dieser Aufgabe sieht die Erfindung mit den Merkmalen des kennzeichnenden Teiles des Anspruches 1 vor, daß der Plattenkörper quaderförmig ist, daß vier Hauptschneiden und an den vier Ecken bzw. Eckbereichen des Plattenkörpers vier Nebenschneiden vorgesehen sind, daß die Hauptschneiden und die Nebenschneiden entgegengesetzt schräg zur Auflagefläche stehen und daß die Freiflächen der Hauptschneiden rechtwinklig zur Auflagefläche angeordnet sind.

Mit den besagten Merkmalen wird eine Wendeschneidplatte geschaffen, die den an sie gestellten Anforderungen bei vielen Anwendungsfällen in hohem Maße gerecht wird. Zugleich ist es möglich, diese Wendeschneidplatte auf besonders zweckmäßige Art und Weise und somit kostengünstig herzustellen.

Eine äußerst vorteilhafte Schneidkantengeometrie ergibt sich dadurch, daß die Hauptschneiden und die Nebenschneiden in jeweils entgegengesetzter Richtung schräg zueinander sowie zur Auflagefläche stehen. Dabei befindet sich jeweils eine Nebenschneide zwischen zwei Hauptschneiden usw., wobei die Schneidkanten von jeweils benachbarten Hauptschneiden bzw.
von Nebenschneiden in gleicher Richtung steigend bzw. fallend angeordnet sind. Die Nebenschneiden gehen dabei jeweils schrägstehend vom Niveau der einen benachbarten Hauptschneide auf das Niveau der anderen, benachbarten Hauptschneide über.

Die als Hauptschneiden dienenden Schneidkanten können gerade oder leicht bogenförmig sein und grundsätzlich Gleiches gilt auch für die Nebenschneiden.

Ein zur Verwendung der Wendeschneidplatten dienendes Werkzeug ist vorzugsweise ein Fräswerkzeug. Hier ist es insbesondere vorteilhaft, wenn bei positivern Axialwinkel λₛ der Hauptschneide und bei positiven Winkel γn der Spanfläche die Sitzfläche der Wendeschneidplatte unter einem negativen Radialwinkel σ zu einer Radialebene steht.

Weitere Merkmale der Erfindung gehen aus Unteransprüchen in Verbindung mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: eine perspektivische Ansicht der Wendeschneidplatte in größerem Maßstab;
- Fig. 2:: eine Seitenansicht der Wendeschneidplatte in ebenfalls größerem, jedoch anderem Maßstab;
- Fig. 3:: eine Draufsicht auf die Wendeschneidplatte gemäß Fig. 2;

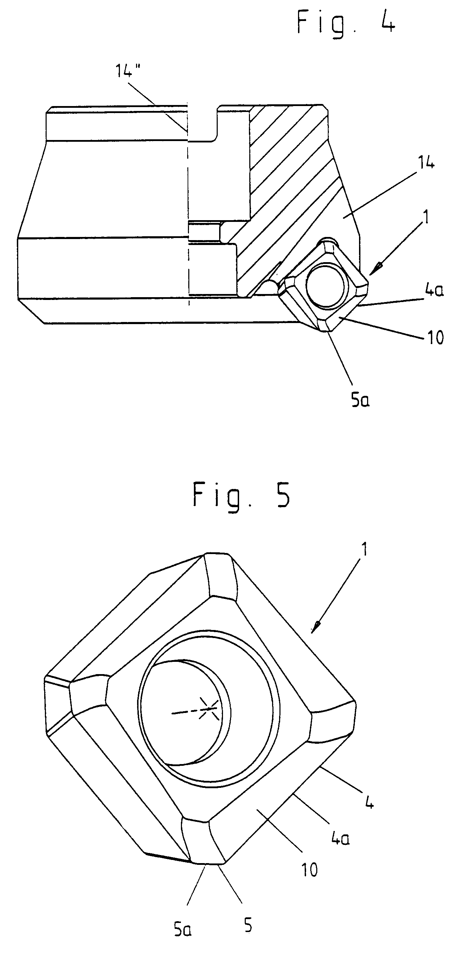

- Fig. 4:: schematisch sowie zum Teil im Schnitt eine Seitenansicht eines Fräsers mit der Darstellung einer Wendeschneidplatte in ihrer Einbaulage;
- Fig. 5:: eine perspektivische Ansicht der Wendeschneidplatte entsprechend ihrer Einbaulage gemäß Fig. 4 in größerem Maßstab;
- Fig. 6:: eine schematische Stirnansicht eines Fräsers mit der Anordnung der Wendeschneidplatte unter einem negativen Radialwinkel σ für die Sitzfläche der Wendeschneidplatte;
- Fig. 7:: eine schematische Seitenansicht eines Fräsers mit der Darstellung der Wendeschneidplatte und von wesentlichen Winkeln;
- Fig. 8:: in größerem Maßstab eine Einzelheit aus Fig. 6;
- Fig. 9:: in nochmals größerem Maßstab eine Ansicht einer Hauptschneide mit benachbarten Nebenschneiden sowie einer bevorzugten Spanfläche mit Spanformungselementen;
- Fig.10:: einen Schnitt längs der Linie X-X in Fig. 9 in nochmals größerem Maßstab;
- Fig.11:: eine Ansicht wie in Fig. 9 von einer abgewandelten Ausführungsform;
- Fig.12:: einen Schnitt längs der Linie XII-XII in Fig. 11 in nochmals größerem Maßstab;
- Fig.13:: eine perspektivische Ansicht wie in Fig. 1 von einem weiteren, abgewandelten Ausführungsbeispiel mit jeweils zweiten oder Sekundär-Nebenschneiden und
- Fig.14:: eine Abwicklung der Haupt- und Nebenschneiden.

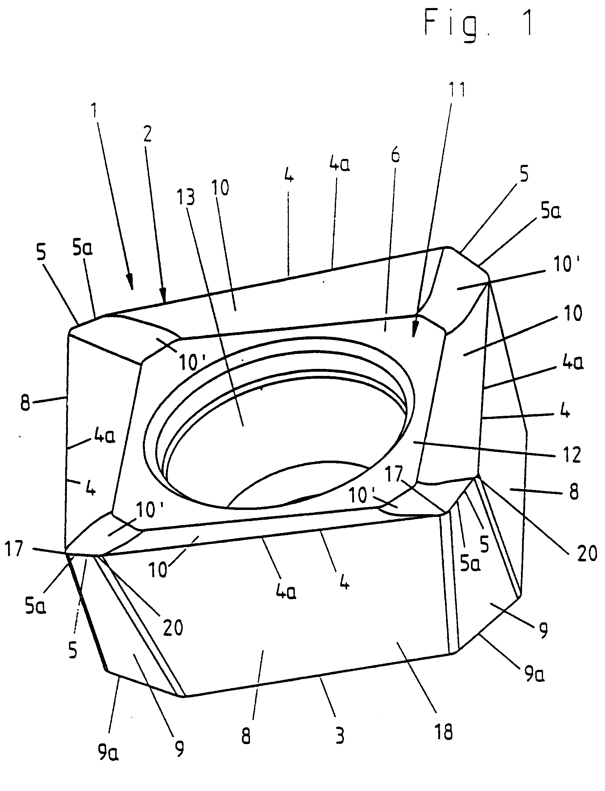

Eine Wendeschneidplatte 1 gemäß Fig. 1 umfaßt einen Plattenkörper 2 mit einer ebenen, als Basisfläche dienenden Auflagefläche 3 und mit Schneidkanten 4 und 5 an seiner, der Auflagefläche 3 gegenüberliegenden Seite 6. Die Wendeschneidplatte 1 weist gemäß dem in Fig. 1 dargestellten Ausführungsbeispiel vier als Hauptschneiden 4a und entsprechend vier als Nebenschneiden 5a verwendbare Schneidkanten 4 bzw. 5 auf. Ferner stehen die als Hauptschneiden 4a und als Nebenschneiden 5a dienenden Schneidkanten 4 bzw. 5 jeweils schräg zur Auflagefläche 3.

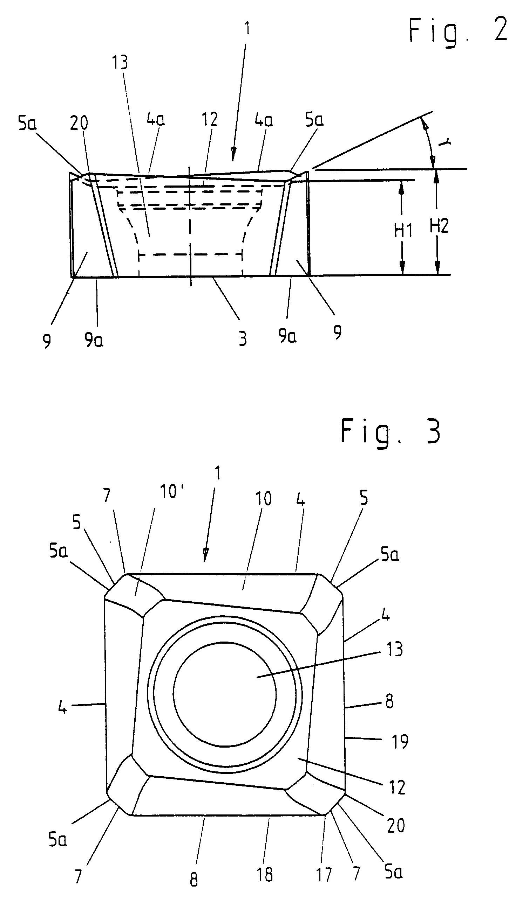

In Umfangsrichtung benachbarte Hauptschneiden 4a und ebenso in Umfangsrichtung benachbarte Nebenschneiden 5a sind jeweils gleichsinnig steigend bzw. fallend angeordnet, wobei sich die Nebenschneiden 5a jeweils zwischen den als Hauptschneiden 4a dienenden Schneidkanten 4 bzw. 5 befinden. Ferner gehen die Nebenschneiden 5a jeweils entgegen der Steigung der Hauptschneiden 4a schräg vom Niveau H1 (Fig. 2) der einen Hauptschneide 4a auf das Niveau H2 der benachbarten Hauptschneide 4a über. Dabei ist das Niveau H1 niedriger als das Niveau H2, so daß die Hauptschneiden 4a gemäß der Darstellung in Fig. 2 von dem niedrigen Niveau H1 rechts in Fig. 2 auf das höhere Niveau H2 links in Fig. 2 ansteigen, woraufhin die nächste Nebenschneide 5a von dem Niveau H2 auf das Niveau H1 der nächsten Hauptschneide abfällt. Der Winkel γ , unter dem die Nebenschneide 5a in Fig. 2 zur Horizontalen steht, beträgt ungefähr 25°.

Die Nebenschneiden 5a sind im Bereich der vier Ecken 7 (Fig. 3) der Wendeschneidplatte 1 angeordnet. Die Länge ihrer Schneidkanten 5 ist im Vergleich zur Länge der Schneidkanten 4 der Hauptschneiden 4a sehr kurz und kann gegebenenfalls in einer Größenordnung von nur 1,5 mm liegen.

Die Hauptschneiden 4a sind geradlinige Schneidkanten 4. Auch die Nebenschneiden 5a sind vorzugsweise geradlinig. Grundsätzlich können die Hauptschneiden 4a und die Nebenschneiden 5a aber auch geringfügig bogenförmig sein und dann längs einer Kurve von dem Niveau H2 auf das Niveau H1 abfallen.

Der Plattengrundkörper 2 ist quaderförmig. Die zu den Hauptschneiden 4a gehörenden Freiflächen 8 stehen jeweils senkrecht zur Auflagefläche 3. Die zu den Nebenschneiden 5a gehörenden Freiflächen 9 stehen schräg zur Auflagefläche 3 derart, daß ihre jeweilige Basiskante 9a länger ist als die Länge der Nebenschneiden 5a. Ferner sind vorzugsweise Fasen im Übergangsbereich der beiden Freiflächen 8 und 9 vorgesehen, wie ebenfalls Fig. 1 zeigt.

Aufgrund der in Fig. 1 von rechts nach links ansteigenden Hauptschneide 4a und der sich rechts anschließenden, ebenfalls ansteigenden Nebenschneide 5a und der sich links (in Fig. 1) fallend an die Hauptschneide 4a anschließenden Nebenschneide 5a sind die Spanflächen 10 der Hauptschneiden 4a und die Spanflächen 10' der Nebenschneiden unsymmetrisch. Ferner fallen die Spanflächen 10 und 10' auf der der Auflagefläche 3 gegenüberliegenden Seite 6 zum Inneren der Wendeschneidplatte 1 hin ab und bilden eine Vertiefung 11. Diese Vertiefung 11 reicht bis zu einer Haltefläche 12 für ein Befestigungsmittel wie z.B. für eine Schraube.

Die Haltefläche 12 ist somit abgesenkt gegenüber allen Schneidkanten 4, 5 und liegt parallel zur Auflagefläche 3, wie Fig. 2 zeigt. Eine Bohrung 13 für das Befestigungsmittel durchgreift ferner den Plattenkörper 2 im Bereich der Haltefläche 12.

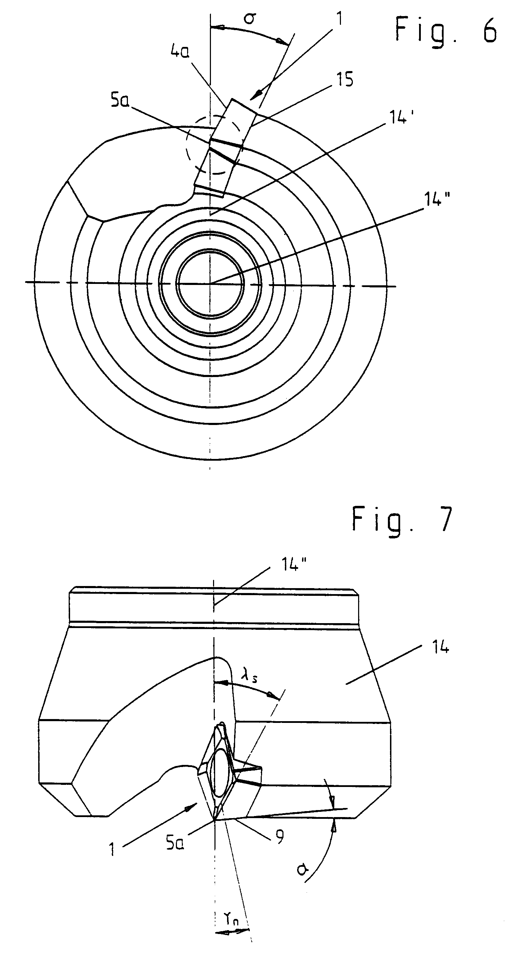

Die Verwendung der Wendeschneidplatte 1 erfolgt zweckmäßigerweise in Verbindung mit einem Werkzeug 14 in Gestalt eines Fräswerkzeuges. Dabei ist es vorteilhaft, wenn der Radialwinkel σ zwischen der Sitzfläche 15, auf der die Wendeschneidplatte 1 mit ihrer Auflagefläche 3 aufliegt, und einer Radialebene 14' gemäß Fig. 6 negativ ist. Die Nebenschneide 5a liegt dann auch unmittelbar oder annähernd in der besagten Radialebene (Fig. 6).

Ferner geht aus Fig. 7 hervor, daß die Winkel der Wendeschneidplatte 1 derart gewählt sind und die Wendeschneidplatte 1 ferner derart eingebaut ist, daß der Axialwinkel λₛ der Hauptschneide positiv ist und daß auch der in radialer Richtung gemessene Winkel γn (Radialwinkel) zwischen Spanfläche 10 und Rotationsachse 14'' positiv ist.

Der Freiwinkel α (Fig. 7) für die Freifläche 9 der Nebenschneide 5a beträgt z.B. 5-6° bzw. vorzugsweise 5° und für die anderen, hier interessierenden Winkel gelten dann vorzugsweise folgende Werte:
negativer Radialwinkel σ = -15° bis -30°,insbesondere -25°
positiver Axialwinkel λₛ = +10° bis +25°,insbesondere +21°
Radialwinkel γn = + 5° bis +15°,insbesondere +12°

Aufgrund des beschriebenen Einbaues der Wendeschneidplatte 1 ist es möglich, einen quaderförmigen Plattenkörper 2 zu verwenden, wobei ferner die Freiflächen 8 der Hauptschneiden 4a rechtwinklig zur Auflagefläche 3 stehen. Nur die kleinen Freiflächen 9 der Nebenschneiden 5a müssen zurückgesetzt sein. Die quaderförmige Grundform der Wendeschneidplatte 1 bietet den Vorteil einer besonders einfachen Bearbeitung auch bei der Herstellung des Plattensitzes im Fräsergrundkörper. Aufgrund der geringfügig zurückgesetzten Nebenschneiden-Freiflächen 9 weist der quaderförmige Plattenkörper 2 eine negative Grundform auf. Durch die radialnegative Einbettung des Plattenkörpers 2 im Grundkörper des Werkzeuges 14 wird ferner ein radialer Freiwinkel erzeugt.

Die versenkt angeordnete Haltefläche 12 wird gebildet durch Spanflächen 10 bzw. 10', die unter einem Winkel zu den Freiflächen 8 bzw. 9 stehen, der kleiner als 90° ist. Der daraus entstehende Keilwinkel beträgt ungefähr 65° und der zugehörige Spanwinkel γ beträgt ungefähr 25° (Fig. 2).

Die Nebenschneiden 5a stehen zur Auflagefläche 3 unter einem Winkel, der größer als 90° ist. Damit verbunden ist die Erzeugung eines Wendelspans, der bereits aufgrund seiner Gestalt aus der Spankammer heraustritt und somit eine reibungslose Spanabfuhr gewährleistet.

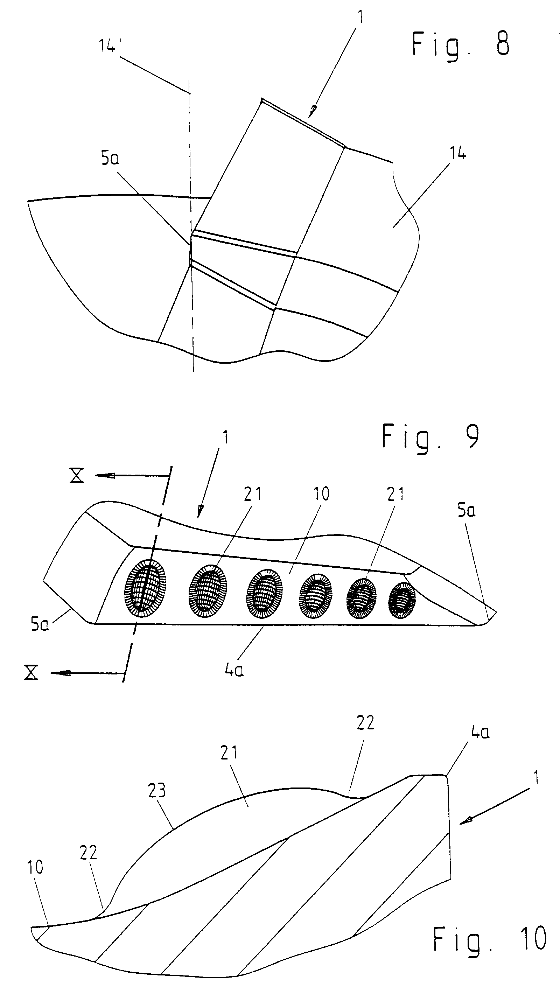

Die abfallende Nebenschneide 5a ist für die auftretenden Zerspankräfte von Bedeutung. Wie vor allem Fig. 6 und in größerem Maßstab auch Fig. 8 zeigen, steht die Nebenschneide 5a annähernd parallel zu der Radialebene 14' bzw. zu einer radialen Mittellinie 14' des um die Rotationsachse 14'' (Fig. 6) rotierenden Werkzeuges (Fräsers) 14. Die Lage der Nebenschneide 5a ist gemäß Fig. 8 entweder parallel zu der Radialebene 14' oder sie ist geringfügig bzw. schwach radial negativ (Fig. 8). Dadurch wird ein Drücken oder Vorschneiden der Nebenschneide 5a verhindert.

Die Nebenschneiden 5a bilden die Ecken 7 bzw. sie erstrecken sich jeweils um die Ecken 7 der Wendeschneidplatte 1 herum und weisen zusammen mit jeweils einer benachbarten Hauptschneide 4a ein gemeinsames Niveauminimum 17 auf. Das Niveauminimum 17 befindet sich im Bereich der Freifläche 8 bzw. ihrer Ebene 18 sowie in geringem Abstand von der Ebene 19 der in Fig. 3 entgegen dem Uhrzeigersinn anschließenden Freifläche 8. Das Niveaumaximum 20 befindet sich in diesem Fall am jeweils anderen Ende der Hauptschneide 4a bzw. der Nebenschneide 5a.

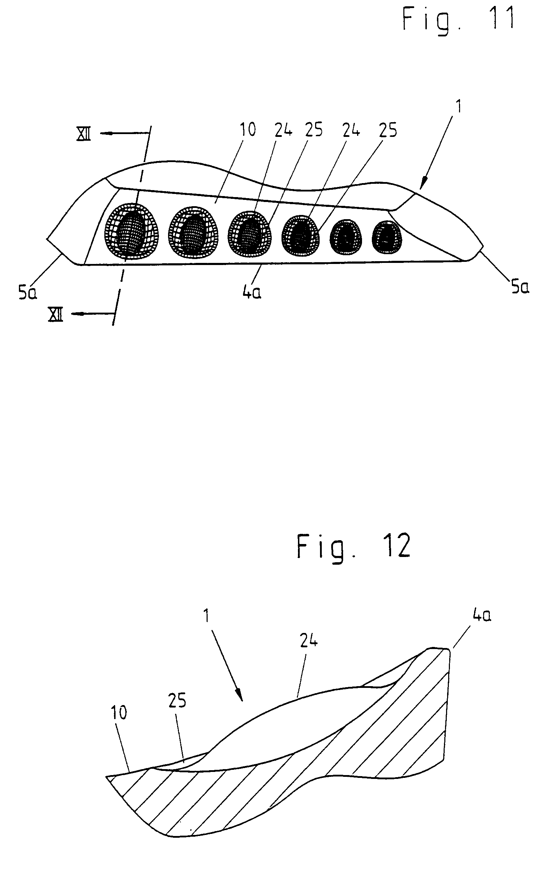

Die beiden Figuren 9 und 10 zeigen schließlich noch eine nicht ausschließlich glatte und in sich leicht gewölbte Spanfläche 10 für die Hauptschneide 4a, sondern eine mit mehreren Spanformungselementen 21 versehene Spanfläche 10. Die Spanformungselemente 21 sind etwas längliche, leicht buckelförmige Erhebungen, die aus der Spanfläche 10 allmählich ansteigen und auf der jeweils gegenüberliegenden Seite auch wieder allmählich in die Spanfläche 10 übergehen. Die Kontur der Spanformungselemente 21 ist im Schnitt daher sowohl konkav als auch konvex, wie auch die Teilbereiche 22 und 23 in Fig. 10 erkennen lassen.

Gemäß Ausführungsbeispiel befinden sich sechs Spanformungselemente 21 auf der Spanfläche 10. Mit ihrer größten Länge erstrecken sich die buckelförmigen Spanformungselemente 21 quer zur Hauptschneide 4a in Spanlaufrichtung.

Die Fig. 10 zeigt im Vergleich mit Fig. 9 insbesondere, daß sich die buckelförmigen Spanformungselemente 21 unmittelbar aus der von der Hauptschneide 4a her abfallenden Spanfläche 10 erheben.

Die beiden Figuren 11 und 12 betreffen ebenfalls buckelförmige Spanformungselemente 24 auf der Spanfläche 10 der Hauptschneide 4a. Die buckelförmigen Spanformungselemente 24 erheben sich jedoch nicht unmittelbar aus der Spanfläche 10 heraus, sondern jeweils aus einer ringförmigen Vertiefung 25. Fußseitig läuft jedes Spanformungselement 24 im Inneren der ringförmigen Vertiefung 25 sowie unterhalb des Niveaus der Spanfläche 10 aus, wie der Schnitt von Fig. 12 zeigt.

Die Spanflächen 10 der Hauptschneiden können somit glatt sein oder Spanformungselemente aufweisen. Darüber hinaus sind aber auch noch weitere Abwandlungen und Ergänzungen möglich, ohne von dem grundsätzlichen Erfindungsgedanken abzuweichen.

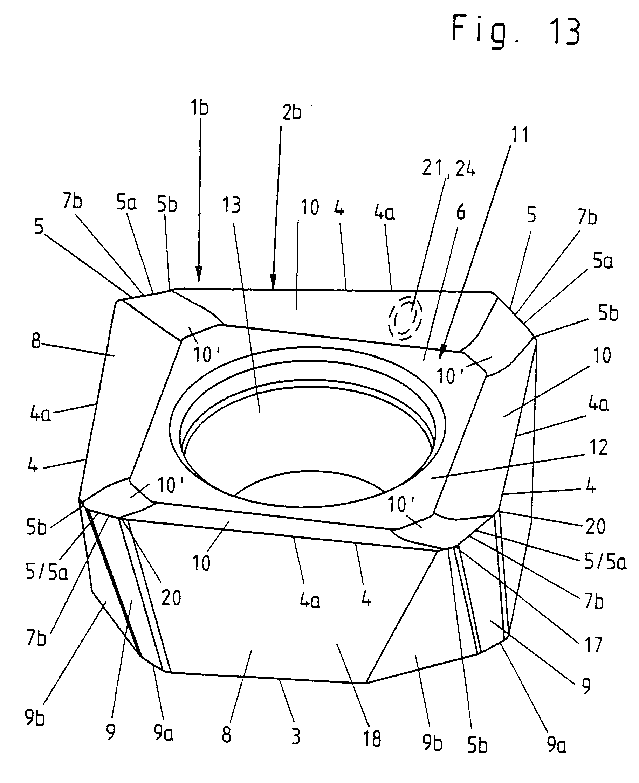

In Fig. 13 ist schließlich noch in perspektivischer Darstellung ein letztes Ausführungsbeispiel von einer Wendeschneidplatte 1b entsprechend der Wendeschneidplatte 1 in Fig. 1 dargestellt und umfaßt zusätzlich zweite oder Sekundär-Nebenschneiden 5b mit jeweils zugehörigen Freiflächen 9b. Gleiche bzw. übereinstimmende Merkmale der Wendeschneidplatte 1b tragen dieselben Bezugszahlen wie die Wendeschneidplatte 1 gemäß Fig. 1. Lediglich die zusätzlichen Merkmale weisen den zusätzlichen Buchstabenindex b auf.

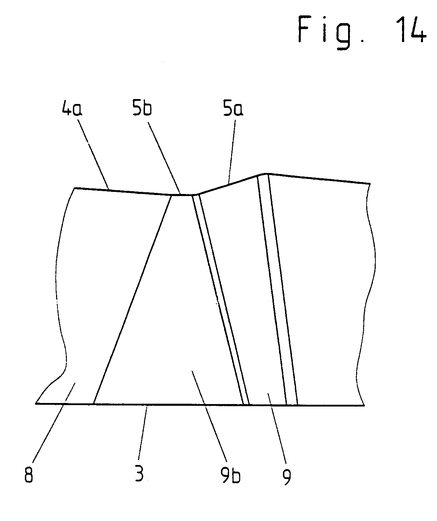

Übereinstimmend mit der Wendeschneidplatte 1 gemäß Fig. 1 ist bei der Wendeschneidplatte 1b vorgesehen, daß sich vier Hauptschneiden 4a auf einer Seite 6 des Plattenkörpers 2b befinden und jeweils im gleichen Sinn (z.B. im Uhrzeigersinn) zu Nebenschneiden 5a hin ansteigen, die an den Ecken 7b bzw. an den Eckbereichen 7b des Plattenkörpers 2b angeordnet sind. Die Nebenschneiden 5a fallen jeweils wieder auf das Niveau der nächsten Hauptschneide 4a ab, wobei sich jedoch zwischen dem unteren Niveau der Nebenschneide 5a und dem unteren Niveau der nächsten Hauptschneide 4a noch eine Sekundär-Nebenschneide 5b befindet, wie auch die Abwicklung in Fig. 14 zeigt. Die Sekundär-Nebenschneide 5b verläuft im wesentlichen parallel zur Auflagefläche 3 des Plattenkörpers 2b der Wendeschneidplatte 1b. Die Hauptschneide 4a, die Sekundär-Nebenschneide 5b und die Nebenschneide 5a sind somit jeweils winklig zueinander angeordnet, wobei ferner die Hauptschneiden 4a und die Nebenschneiden 5a jeweils zu den Sekundär-Nebenschneiden 5b hin abfallen.

Die zur Sekundär-Nebenschneide 5b gehörende Freifläche 9b bildet mit der Auflagefläche 3 des Plattenkörpers 2b einen stumpfen Winkel, ebenso wie dies für die Freifläche 9 der Nebenschneide 5a gilt. Lediglich die Freifläche 8 bildet vorzugsweise zusammen mit der Auflagefläche 3 einen rechten Winkel.

Die Sekundär-Nebenschneide ist relativ kurz. Die zu ihr gehörende Freifläche 9b ist trapezförmig.

Schließlich stehen die Hauptschneide 4a, die Sekundär-Nebenschneide 5b und die Nebenschneide 5a nicht nur in der Abwicklung gemäß Fig. 14 und somit in Seitenprojektion winklig zueinander, sondern sie sind auch in der Draufsicht auf die Wendeschneidplatte 1b jeweils winklig zueinander angeordnet. Dabei steht die Nebenschneide 5a zur angrenzenden Hauptschneide 4a etwa unter einem Winkel von 45° und die Sekundär-Nebenschneide 5b steht zu der an sie angrenzenden Hauptschneide 4a unter einem Winkel von z.B. 30°.

Im Übergangsbereich zwischen den Freiflächen 8, 9 bzw. 9a und 9b können jeweils noch Fasen vorgesehen sein, wie dies in Fig. 13 dargestellt ist. Auch zwischen den Freiflächen 8 und 9 des Ausführungsbeispieles gemäß Fig. 1 sind Fasen vorzugsweise angeordnet. Anstelle der Fasen können in allen Fällen auch Rundungen in grundsätzlich bekannter Weise vorgesehen sein.

Schließlich können sich auch noch Spanformungselemente 21 auf den verschiedenen Spanflächen 10 der Wendeschneidplatte 1b gemäß Fig. 13 befinden, wie dies anhand von einem einzigen Spanformungselement 21 in gestrichelter Weise schematisch in Fig. 13 angedeutet ist. Es können Spanformungselemente 21 oder 24 gemäß den verschiedenen in den Figuren 9 bis 12 dargestellten Ausführungsbeispielen auch bei der Wendeschneidplatte 1b vorgesehen sein und sind in Fig. 13 nur der besseren Übersicht wegen nicht vollständig dargestellt.

Die Erfindung ist daher nicht auf die in den Figuren konkret dargestellten Ausführungsbeispiele beschränkt vielmehr sind auch noch Abwandlungen und Ergänzungen möglich, ohne von dem durch die Patentansprüche definierten Erfindungsgedanken abzuweichen.

## Patentansprüche

1. Wendeschneidplatte mit einem Plattenkörper (2), der als Basisfläche eine ebene Auflagefläche (3) sowie Hauptschneiden (4a) und Nebenschneiden (5a) an seiner, der Auflagefläche (3) gegenüberliegenden Seite (6) aufweist, wobei ferner die Freiflächen (9) der Nebenschneiden (5a) von diesen zurücktretend schräg zur Auflagefläche (3) geneigt sind, dadurch gekennzeichnet, daß der Plattenkörper (2) quaderförmig ist, daß vier Hauptschneiden (4a) und an den vier Eckbereichen des Plattenkörpers (2) vier Nebenschneiden (5a) vorgesehen sind, daß die Hauptschneiden (4a) und die Nebenschneiden (5a) entgegengesetzt schräg zur Auflagefläche (3) stehen und daß die Freiflächen (8) der Hauptschneiden (4a) rechtwinklig zur Auflagefläche (3) angeordnet sind.

2. Wendeschneidplatte nach Anspruch 1, dadurch gekennzeichnet, daß die Nebenschneiden (5a) jeweils entgegen der Steigung der Hauptschneiden (4a) schräg vom Niveau (H1) der einen Hauptschneide (4a) auf das Niveau (H2) der anderen, benachbarten Hauptschneide (4a) übergehen.

3. Wendeschneidplatte nach einem oder mehreren der vorhergehenden Ansprüche, dadurch gekennzeichnet, daß der Winkel zwischen Freifläche (8, 9) und Spanfläche (10) kleiner als 90° ist.

4. Wendeschneidplatte nach einem oder mehreren der vorhergehenden Ansprüche, dadurch gekennzeichnet, daß je eine zweite oder Sekundär-Nebenschneide (5b) zwischen einer Hauptschneide (4a) und einer Nebenschneide (5a) angeordnet ist.

5. Wendeschneidplatte nach einem oder mehreren der vorhergehenden Ansprüche, dadurch gekennzeichnet, daß die Hauptschneide (4a), die Sekundär-Nebenschneide (5b) und die Nebenschneide (5a) jeweils winklig zueinander angeordnet sind.

6. Wendeschneidplatte nach einem oder mehreren der vorhergehenden Ansprüche, dadurch gekennzeichnet, daß die Hauptschneide (4a) und daß die Nebenschneide (5a) jeweils zur Sekundär-Nebenschneide (5b) hin abfallen.

7. Wendeschneidplatte nach einem oder mehreren der vorhergehenden Ansprüche, dadurch gekennzeichnet, daß die Sekundär-Nebenschneide (5b) parallel zur Auflagefläche (3) steht.

8. Wendeschneidplatte nach einem oder mehreren der vorhergehenden Ansprüche, dadurch gekennzeichnet, daß vier Hauptschneiden (4a) auf einer Seite (6) des Plattenkörpers (2b) vorgesehen sind und jeweils gleichsinnig zu den Ecken (7b) bzw. zu den Eckbereichen (7b) des Plattenkörpers (2b) und zu dort angeordneten Nebenschneiden (5a) hin ansteigen, die im Bereich der Ecken (7b) auf das Niveau der nächsten Hauptschneide (4a) abfallen, wobei sich ferner die Sekundär-Nebenschneiden (5b) jeweils zwischen den Hauptschneiden (4a) und den Nebenschneiden (5a) auf niedrigem Niveau befinden.

9. Wendeschneidplatte nach einem oder mehreren der vorhergehenden Ansprüche, dadurch gekennzeichnet, daß eine Spanfläche (10) mit mindestens einem Spanformungselement (21, 24) vorgesehen ist.

10. Wendeschneidplatte nach einem oder mehreren der vorhergehenden Ansprüche, dadurch gekennzeichnet, daß als Spanformungselemente (21, 24) mehrere, buckelförmige Erhebungen vorgesehen sind.

11. Wendeschneidplatte nach einem oder mehreren der vorhergehenden Ansprüche, dadurch gekennzeichnet, daß als Spanformungselemente (24) mehrere buckelförmige, in Vertiefungen (25) angeordnete Erhebungen vorgesehen sind.

12. Werkzeug, insbesondere Fräswerkzeug mit Wendeschneidplatten (1) nach einem oder mehreren der vorhergehenden Ansprüche, dadurch gekennzeichnet, daß die Sitzfläche (15) der Wendeschneidplatte (1) unter einem negativen Radialwinkel (σ) zu einer Radialebene (14') steht, wobei ferner der Axialwinkel (λₛ) der Hauptschneide (4a) und der in radialer Richtung gemessene Winkel (γn) zwischen Spanfläche (10) und der Rotationsachse (14'') positiv sind.

13. Werkzeug nach Anspruch 12, dadurch gekennzeichnet, daß die Wendeschneidplatte (1) derart eingebaut ist, daß die Nebenschneide (5a) axial angeordnet ist und daß die wirksame Hauptschneide (4a) radial außerhalb von der Nebenschneide (5a) angeordnet ist.

14. Werkzeug nach Anspruch 12 oder 13, dadurch gekennzeichnet, daß die Nebenschneide (5a) parallel zu einer Radialebene (14') des Werkzeuges (14) angeordnet ist oder geringfügig radial negativ geneigt ist.

## Claims

1. An indexable cutting insert having an insert body (2) which as a base surface has a flat contact surface (3) and main cutting edges (4a) and secondary cutting edges (5a) at its side (6) opposite to the contact surface (3), wherein moreover the relief surfaces (9) of the secondary cutting edges (5a), retreating therefrom, are inclined obliquely with respect to the contact surface (3), characterised in that the insert body (2) is parallelepipedic, that there are provided four main cutting edges (4a) and at the four corner regions of the insert body (2) four secondary cutting edges (5a), that the main cutting edges (4a) and the secondary cutting edges (5a) are oppositely inclined relative to the contact surface (3), and that the relief surfaces (8) of the main cutting edges (4a) are arranged at a right angle to the contact surface (3).

2. An indexable cutting insert according to claim 1 characterised in that the secondary cutting edges (5a) each go opposite to the inclination of the main cutting edges (4a) obliquely from the level (H1) of the one main cutting edge (4a) to the level (H2) of the other adjacent main cutting edge (4a).

3. An indexable cutting insert according to one or more of the preceding claims characterised in that the angle between a relief surface (8, 9) and a true rake (10) is less than 90°.

4. An indexable cutting insert according to one or more of the preceding claims characterised in that a respective second or further secondary cutting edge (5b) is arranged between a main cutting edge (4a) and a secondary cutting edge (5a).

5. An indexable cutting insert according to one or more of the preceding claims characterised in that the main cutting edge (4a), the second secondary cutting edge (5b) and the secondary cutting edge (5a) are respectively arranged at an angle relative to each other.

6. An indexable cutting insert according to one or more of the preceding claims characterised in that the main cutting edge (4a) and the secondary cutting edge (5a) respectively fall away towards the second secondary cutting edge (5b).

7. An indexable cutting insert according to one or more of the preceding claims characterised in that the second secondary cutting edge (5b) is parallel to the contact surface (3).

8. An indexable cutting insert according to one or more of the preceding claims characterised in that four main cutting edges (4a) are provided on one side (6) of the insert body (2) and respectively rise in the same direction towards the corners (7b) or the corner regions (7b) of the insert body (2b) and secondary cutting edges (5a) which are arranged there and which in the region of the corners (7b) fall away to the level of the next main cutting edge (4a), wherein moreover the second secondary cutting edges (5b) are respectively disposed between the main cutting edges (4a) and the secondary cutting edges (5a) at a low level.

9. An indexable cutting insert according to one or more of the preceding claims characterised in that there is provided a true rake (10) with at least one chip breaking element (21, 24).

10. An indexable cutting insert according to one or more of the preceding claims characterised in that a plurality of humpbacked raised portions are provided as the chip breaking elements (21, 24).

11. An indexable cutting insert according to one or more of the preceding claims characterised in that a plurality of humpbacked raised portions arranged in depressions (25) are provided as chip breaking elements (24).

12. A tool, in particular a milling tool, having indexable cutting inserts (1) according to one or more of the preceding claims characterised in that the seat surface (15) of the indexable cutting insert (1) is at a negative radial angle (σ) relative to a radial plane (14'), wherein moreover the axial angle (λₛ) of the main cutting edge (4a) and the angle (γn), as measured in the radial direction, between the true rake (10) and the axis of rotation (14'') are positive.

13. A tool according to claim 12 characterised in that the indexable cutting insert (1) is installed in such a way that the secondary cutting edge (5a) is arranged axially and the effective main cutting edge (4a) is arranged radially outside the secondary cutting edge (5a).

14. A tool according to claim 12 or claim 13 characterised in that the secondary cutting edge (5a) is arranged parallel to a radial plane (14') of the tool (14) or is slightly radially negatively inclined.

## Revendications

1. Plaquette amovible avec un corps de plaquette (2) qui présente comme face de base une face d'appui plane (3) ainsi que des tranchants principaux (4a) et des tranchants secondaires (5a) à son côté (6) opposé à la face d'appui (3), les faces de dépouille (9) des tranchants secondaires (5a) étant disposées, suivant un retrait relativement à ceux-ci, en biais à la face d'appui (3), caractérisée en ce que le corps de plaquette (2) est parallélépipède, que sont prévus quatre tranchants principaux (4a) et aux quatre zones angulaires du corps de plaquette (2) quatre tranchants secondaires (5a), en ce que les tranchants principaux (4a) et les tranchants secondaires (5a) s'étendent suivant une inclinaison opposée relativement à la face d'appui (3) et en ce que les faces de dépouille (8) des tranchants principaux (4a) sont disposées perpendiculairement à la face d'appui (3).

2. Plaquette amovible selon la revendication 1, caractérisée en ce que les tranchants secondaires (5a) rejoignent respectivement, contrairement à la remontée des tranchants principaux (4a), en biais du niveau (H1) d'un tranchant principal (4a) le niveau (H2) de l'autre tranchant principal (4a) avoisinant.

3. Plaquette amovible selon l'une ou plusieurs des revendications précédentes, caractérisée en ce que l'angle entre la face de dépouille (8, 9) et la face de coupe (1a) est inférieur à 90°.

4. Plaquette amovible selon l'une ou plusieurs des revendications précédentes, caractérisée en ce que respectivement un deuxième tranchant secondaire ou tranchant secondaire additionnel (5b) est disposé entre un tranchant principal (4a) et un tranchant secondaire (5a).

5. Plaquette amovible selon l'une ou plusieurs des revendications précédentes, caractérisée en ce que le tranchant principal (4a), le tranchant secondaire additionnel (5b) et le tranchant secondaire (5a) sont disposés respectivement suivant un angle les uns relativement aux autres.

6. Plaquette amovible selon l'une ou plusieurs des revendications précédentes, caractérisée en ce que le tranchant principal (4a) et le tranchant secondaire (5a) sont en pente respectivement vers le tranchant secondaire additionnel (5b).

7. Plaquette amovible selon l'une ou plusieurs des revendications précédentes, caractérisée en ce que le tranchant secondaire additionnel (5b) s'étend parallèlement à la face d'appui (3).

8. Plaquette amovible selon l'une ou plusieurs des revendications précédentes, caractérisée en ce que sont prévus quatre tranchants principaux (4a) sur un côté (6) du corps de plaquette (2b) qui remontent respectivement dans le même sens vers les coins (7b) et, respectivement les zones angulaires (7b) du corps de plaquette (2b) et aux tranchants secondaires (5a) qui y sont disposés qui, au voisinage des coins (7b) redescendent au niveau du prochain tranchant principal (4a), et en outre les tranchants secondaires additionnels (5b) se trouvant respectivement entre les tranchants principaux (4a) et les tranchants secondaires (5a) au niveau bas.

9. Plaquette amovible selon l'une ou plusieurs des revendications précédentes, caractérisée en ce que la face de coupe (10) est pourvue d'au moins un élément à former les copeaux (21, 24).

10. Plaquette amovible selon l'une ou plusieurs des revendications précédentes, caractérisée en ce que sont prévus comme éléments à former les copeaux (21, 24) plusieurs surélévations en forme de bosse.

11. Plaquette amovible selon l'une ou plusieurs des revendications précédentes, caractérisée en ce que sont prévus comme éléments à former les copeaux (24) plusieurs surélévations en forme de bosse disposées dans des creux (25).

12. Outil, notamment outil à fraiser avec des plaquettes amovibles (1) selon l'une ou plusieurs des revendications précédentes, caractérisé en ce que la surface d'ajustage (15) de la plaquette amovible (1) s étend suivant un angle radial négatif (σ) à un plan radial 14', l'angle axial (λₛ) du tranchant principal (4a) et l'angle (γn) mesuré dans la direction radiale entre la face de coupe (10) et l'axe de rotation (14'') étant en outre positif.

13. Outil selon la revendication 12, caractérisé en ce que la plaquette amovible (1) est montée de telle sorte que le tranchant secondaire (5a) soit disposé axialement et que le tranchant principal actif (4a) soit disposé radialement à l'extérieur du tranchant secondaire (5a).

14. Outil selon la revendication 12 ou 13, caractérisé en ce que le tranchant secondaire (5a) est disposé parallèlement à un plan radial (14') de l'outil (14) ou présente une légère inclinaison radiale négative.
